Europäisches Patentamt

European Patent Office

Office européen des brevets

(19)

(11) Veröffentlichungsnummer : **0 027 272**
.B1

(12) **EUROPÄISCHE PATENTSCHRIFT**

(45) Veröffentlichungstag der Patentschrift :
01.09.82

(21) Anmeldenummer : 80106212.6

(22) Anmeldetag : 11.10.80

(51) Int. Cl.³ : **B 60 B** **3/06**, B 60 B 1/08,
B 24 C 1/10, C 22 F 3/00

(54) Leichtmetallgussfelge und Verfahren zur Oberflächenbehandlung derselben.

(30) Priorität : 12.10.79 DE 2941415

(43) Veröffentlichungstag der Anmeldung :
22.04.81 (Patentblatt 81/16)

(45) Bekanntmachung des Hinweises auf die Patenterteilung : 01.09.82 Patentblatt 82/35

(84) Benannte Vertragsstaaten :
AT BE CH DE FR GB IT LI NL SE

(56) Entgegenhaltungen :
DE C 973 526
FR A 1 507 495
US A 3 643 379

(73) Patentinhaber : Atlas Fahrzeugtechnik GmbH
Eggenpfad 26
D-5980 Werdohl (DE)

(72) Erfinder : Knüfelmann, Manfred
Hörderstrasse 69
D-4000 Düsseldorf 30 (DE)

(74) Vertreter : Hassler, Werner, Dr.
Postfach 17 04 Asenberg 62
D-5880 Lüdenscheid (DE)

Imprimerie Jouve, 18, rue St-Denis, 75001 Paris, France

EP 0 027 272 B1

## Leichtmetallgußfelge und Verfahren zur Oberflächenbehandlung derselben

Die Erfindung betrifft eine Leichtmetallgußfelge für Kraftfahrzeuge.

Bekannte Leichtmetallgußfelgen sind auf ihren Sichtflächen lackiert. Diese Lackierung dient einerseits zur optischen Verbesserung der Oberfläche und andererseits zur Erhöhung der Korrosionsbeständigkeit. Im Gebrauch wird die Lackschicht sehr schnell abgenutzt und beschädigt, so daß der Korrosionsschutz der Lackschicht nur ungenügend ist.

Aufgabe der Erfindung ist die Bereitstellung einer Leichtmetallgußfelge mit optisch ansprechender und korrosionsfester Oberfläche.

Diese Aufgabe wird nach der Erfindung dadurch gelöst, daß die Leichtmetallgußfelge eine blanke und verdichtete, kugelpolierte Oberflächenschicht aufweist.

Die Kugelpolierung erfolgt mithilfe vibrierter Stahlkugeln, die sich zusammen mit den Gußfelgen in einem Schwingbehälter befinden. Die Stahlkugeln bearbeiten die Oberflächenschicht. Insbesondere werden Spitzen, Erhebungen und Rauhigkeiten der Oberflächenschicht bearbeitet, wobei eine Verdichtung erfolgt und die Spitzen vergleichmäßigt werden. Dadurch erhält die Oberflächenschicht der Leichtmetallgußfelge einen Glanz, sie wird blank und es erfolgt eine Gefügeverdichtung. Man erhält also eine Leichtmetallgußfelge mit optisch ansprechender Oberfläche. Das verdichtete Gefüge weist eine hohe Korrosionsbeständigkeit auf, weil die korrosiven Einflüsse an der verdichteten Struktur keine Angriffsmöglichkeit finden. Es ist überraschend, daß das Kugelpolieren bei derartigen flächenhaften Teilen zu einem so vorteilhaften Ergebnis führt. Die Korrosionsbeständigkeit ist um ein Mehrfaches größer gegenüber einem Oberflächenschutz einer Lackschicht. Die kugelpolierte Oberflächenschicht behält ihre vorteilhaften Eigenschaften auch nach langer Zeitdauer bei, wogegen eine Lackschicht beschädigt wird und abblättert.

In weiterer Ausbildung betrifft die Erfindung ein Verfahren zur Oberflächenbehandlung von Leichtmetallgußfelgen, wonach die Leichtmetallgußfelgen mittels vibrierter Stahlkugeln poliert werden. Dieses Verfahren wird in Schwingbehältern durchgeführt und ergibt eine Leichtmetallgußfelge mit vergüteter, blanker und verdichteter Oberflächenschicht.

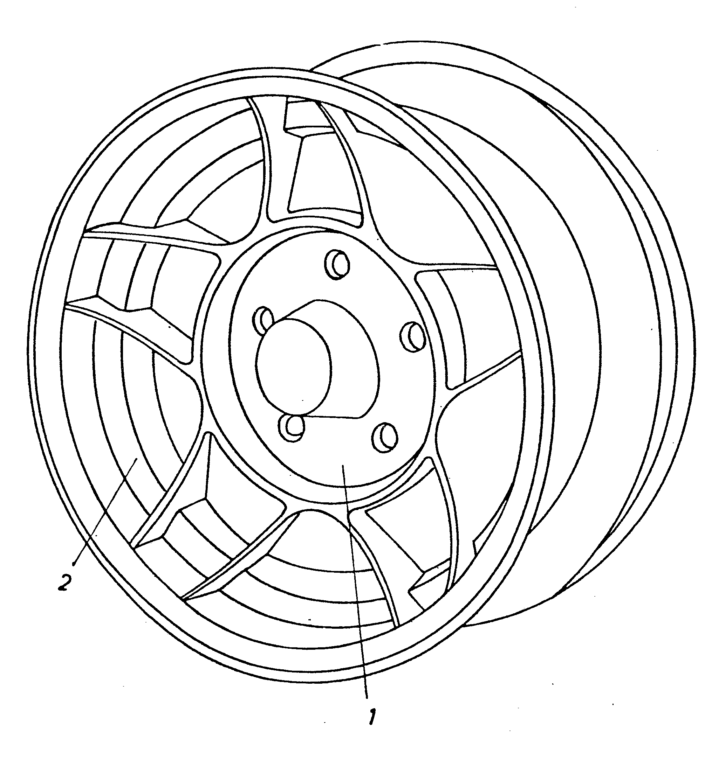

Eine Ausführungsform der Erfindung wird im folgenden unter Bezugnahme auf die anliegende Zeichnung erläutert, die in der einzigen Figur eine perspektivische Ansicht einer Leichtmetallgußfelge zeigt.

Die dargestellte Leichtmetallgußfelge weist die auch nach der Montage sichtbaren seitlichen Nabenflächen 1 und Flanschteile 2 auf. Die Leichtmetallgußfelge hat nach der Herstellung eine gleichmäßige Rauhigkeit einer Gußfelge und ist matt. Die Oberfläche besitzt zahlreiche Spitzen und sonstige Rauhigkeiten, die dem Angriff korrosiver Einflüsse offenstehen.

Die Erfindung sieht eine Behandlung der Leichtmetallgußfelge in dem Behälter eines Vibrators vor. Dieser Behälter ist mit kleinen Stahlkugeln von 2 mm Durchmesser gefüllt. Diese Stahlkugeln, die vibriert werden, bearbeiten durch diese schwingende Bewegung die Oberfläche. Es kommt zu Gefügeveränderungen der Oberflächenschicht, insbesondere zu einer Verdichtung der Spitzen und der übrigen Oberflächenbereiche. Nach dieser Bearbeitung hat die Oberflächenschicht ein verdichtetes Gefüge. Die Oberflächenschicht ist blank. Dieses bedeutet einerseits eine optische Verbesserung und andererseits eine wesentliche Erhöhung der Beständigkeit gegen Korrosionseinflüsse. Die Korrosionsfestigkeit bleibt dauernd erhalten. Infolgedessen behält die Leichtmetallgußfelge auch nach langem Gebrauch ihr gutes optisches Aussehen und ihre korrosionsabweisenden Eigenschaften bei.

### Ansprüche

1. Leichtmetallgußfelge für Kraftfahrzeuge, dadurch gekennzeichnet, daß dieselbe eine blanke und verdichtete, kugelpolierte Oberflächenschicht aufweist.

2. Verfahren zur Oberflächenbehandlung von Leichtmetallgußfelgen für Kraftfahrzeuge, dadurch gekennzeichnet, daß die Leichtmetallgußfelgen mittels vibrierter Stahlkugeln poliert werden.

### Claims

1. Light-metal cast rim for motor vehicles, characterized in that same comprises a bright and densified, ball-polished surface layer.

2. A process for the surface treatment of light-metal cast rims for motor vehicles, characterized in that the light-metal cast rims are polished by means of vibrated steels balls.

### Revendications

1. Jante coulée en métal léger pour véhicules automobiles, caractérisée en ce que celle-ci présente une couche de surface brillante et comprimée, qui est polie par billes.

2. Procédé de traitement de surface de jantes coulées en métal pour des véhicules automobiles, caractérisé en ce que les jantes coulées en métal léger sont polies au moyen de billes d'acier vibrées.

2

1